# EUROPÄISCHE PATENTSCHRIFT

(11) **EP 3 455 098 B1**
(45) Veröffentlichungstag und Bekanntmachung des Hinweises auf die Patenterteilung: **14.07.2021**
(21) Anmeldenummer: 17721385.7
(22) Anmeldetag: 04.05.2017
(51) Int. Cl.: B60L 1/04, B60L 1/06, B60H 1/00, F16H 57/04

(54) **VERFAHREN ZUM BETREIBEN EINES KRAFTFAHRZEUGS UND KRAFTFAHRZEUG**
METHOD FOR OPERATING A MOTOR VEHICLE, AND MOTOR VEHICLE
PROCÉDÉ DE FONCTIONNEMENT D'UN VÉHICULE AUTOMOBILE ET VÉHICULE AUTOMOBILE

(30) Priorität: 09.05.2016 DE 102016207912
(43) Veröffentlichungstag der Anmeldung: 20.03.2019
(73) Patentinhaber: Audi AG, 85045 Ingolstadt (DE)
(72) Erfinder: GRAF, Philip, 70806 Kornwestheim (DE)
(86) Internationale Anmeldenummer: PCT/EP2017/060709
(87) Internationale Veröffentlichungsnummer: WO 2017/194388

(56) Entgegenhaltungen:
- US-A- 5 895 590
- US-A1- 2011 095 717
- US-A1- 2012 125 278
- US-A1- 2013 125 853
- US-A1- 2013 213 335

## Beschreibung

Die Erfindung betrifft ein Verfahren zum Betreiben eines Kraftfahrzeugs, bei welchem ein elektrischer Energiespeicher des Kraftfahrzeugs, welcher zum Speichern von elektrischer Energie für ein Antriebsaggregat des Kraftfahrzeugs ausgebildet ist, geladen wird. Hierbei wird wenigstens eine elektrische Heizeinrichtung des Kraftfahrzeugs von einer Ladestation mit elektrischer Energie versorgt, welche zum Laden des elektrischen Energiespeichers ausgebildet ist. Des Weiteren betrifft die Erfindung ein Kraftfahrzeug.

Die US 2013/213335 A1 beschreibt ein Verfahren zum Aufwärmen eines Antriebsstrangs eines Hybridfahrzeugs mittels einer Mehrzahl von Widerstandsheizelementen während des Ladens einer Fahrzeugbatterie des Hybridfahrzeugs.

Die US 5 895 590 A beschreibt eine Getriebeöl-Heizvorrichtung für ein Elektroauto.

Die DE 10 2010 021 028 A1 beschreibt eine Interaktion eines Thermomanagements und eines Lademanagements beim externen Laden eines Plug-in-Hybrids oder Elektrofahrzeugs. Das Thermomanagement des Kraftfahrzeugs regelt hierbei eine Kühlung oder Heizung von Bauteilen in Form eines Motors, einer Batterie oder einer Leistungselektronik.

Des Weiteren beschreibt die US 2010/0280698 A1 ein Hybridfahrzeug, bei welchem ein Ladeanschluss Strom von einer Stromquelle außerhalb des Fahrzeugs erhält. Während eine Stromspeichereinrichtung des Fahrzeugs geladen wird, heizt ein Blockheizer einen Verbrennungsmotor des Fahrzeugs auf, indem der Blockheizer Betriebsstrom von dem Ladeanschluss erhält.

Des Weiteren ist es aus dem Stand der Technik bekannt, bei Fahrzeugen mit einem elektrischen Energiespeicher, welcher zum Speichern von elektrischer Energie für ein Antriebsaggregat des Fahrzeugs ausgebildet ist, während des Ladens die für eine Klimatisierung oder Erwärmung des Fahrgastraums erforderliche elektrische Leistung aus einer Ladestation oder Ladesäule zu beziehen. Dies gilt beispielsweise für batterieelektrische Fahrzeuge oder Plug-in-Hybridfahrzeuge, welche auch als Steckdosen-Hybridfahrzeuge bezeichnet werden. Hierdurch kann vermieden werden, dass die Energie für das Aufwärmen oder Abkühlen des Fahrgastraums aus der Traktionsbatterie bezogen wird.

Üblicherweise werden jedoch Antriebsstrangkomponenten des Kraftfahrzeugs über die Verluste in den jeweiligen Komponenten auf ihre Betriebstemperatur gebracht.

Aufgabe der vorliegenden Erfindung ist es daher, ein Verfahren und ein Kraftfahrzeug der eingangs genannten Art zu schaffen, mittels welchem sich eine Reichweite des Kraftfahrzeugs vergrößern lässt.

Diese Aufgabe wird durch ein Verfahren mit den Merkmalen des Patentanspruchs 1 und durch ein Kraftfahrzeug mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Betreiben eines Kraftfahrzeugs wird ein elektrischer Energiespeicher des Kraftfahrzeugs geladen, welcher zum Speichern von elektrischer Energie für ein Antriebsaggregat des Kraftfahrzeugs ausgebildet ist. Wenigstens eine elektrische Heizeinrichtung des Kraftfahrzeugs wird von einer Ladestation mit elektrischer Energie versorgt, welche zum Laden des elektrischen Energiespeichers ausgebildet ist. Hierbei wird mittels der wenigstens einen elektrischen Heizeinrichtung wenigstens eine Komponente eines Antriebsstrangs des Kraftfahrzeugs mit Wärme beaufschlagt, welche beim Antreiben wenigstens eines antreibbaren Rads des Kraftfahrzeugs im Kraftfluss zwischen dem Antriebsaggregat und dem wenigstens einen Rad angeordnet ist.

Die wenigstens eine elektrische Heizeinrichtung ist mit wenigstens einem in einem Gehäuse der Komponente angeordneten Bauteil der Komponente in Kontakt. Hierbei wird das wenigstens eine Bauteil mit der Wärme beaufschlagt.

Insbesondere bei rasch beheizbaren Komponenten des Antriebsstrangs braucht das Erwärmen mittels der wenigstens einen elektrischen Heizeinrichtung nicht über den gesamten zum Laden des Energiespeichers vorgesehenen Zeitraum hinweg zu erfolgen.

Bei dem erfindungsgemäßen Verfahren ist vorgesehen, dass nicht über den gesamten zum Laden des Energiespeichers vorgesehenen Zeitraum hinweg, sondern lediglich während eines Teils des Zeitraums die wenigstens eine Komponente des Antriebsstrangs mit der Wärme beaufschlagt wird, welcher insgesamt für das Laden des elektrischen Energiespeichers genutzt wird. Vorliegend ist die für das Erwärmen der wenigstens einen Komponente des Antriebsstrangs auf ihre Betriebstemperatur vorzusehende Zeitspanne kürzer als der zum Laden des Energiespeichers erforderliche Zeitraum. Daher wird gegen Ende des Zeitraums für das Laden des elektrischen Energiespeichers die wenigstens eine Komponente des Antriebsstrangs mit der Wärme beaufschlagt.

Das Versorgen der wenigstens einen elektrischen Heizeinrichtung mit der elektrischen Energie durch die Ladestation überlappt mit dem Zeitraum des Ladens des elektrischen Energiespeichers und wird auch im Anschluss an das Laden des elektrischen Energiespeichers vorgenommen. Auf diese Weise lässt sich besonders gut sicherstellen, dass unmittelbar vor Fahrtantritt die wenigstens eine Komponente des Antriebsstrangs mit ausreichend Wärme beaufschlagt und insbesondere auf ihre Betriebstemperatur gebracht ist.

Dem liegt die Erkenntnis zugrunde, dass insbesondere die mechanischen Komponenten des Antriebsstrangs, welche zwischen dem Antriebsaggregat und dem Rad angeordnet sind, bei niedrigen Temperaturen einen schlechten Wirkungsgrad haben. Niedrige Temperaturen dieser Komponenten führen daher zu erhöhten Verlustleistungen und damit erhöhten Fahrwiderständen. Dies macht sich bemerkbar, bis die Komponenten ihre Betriebstemperatur erreicht haben. Erhöhte Fahrwiderstände führen jedoch zu einem erhöhten Verbrauch und damit zu einer reduzierten Reichweite des Kraftfahrzeugs.

Werden jedoch wie vorliegend diese mechanischen Komponenten mittels der elektrischen Heizeinrichtungen des Kraftfahrzeugs aufgewärmt, so lassen sich die Fahrwiderstände des Kraftfahrzeugs im Fahrbetrieb reduzieren. Die elektrische Energie zum Beaufschlagen der wenigstens einen Komponente des Antriebsstrangs des Kraftfahrzeugs mit der Wärme wird jedoch direkt aus der Ladestation beziehungsweise Ladesäule entnommen. Da diese elektrische Energie somit während der Fahrt des Kraftfahrzeugs nicht dem elektrischen Energiespeicher des Fahrzeugs entnommen zu werden braucht, werden die Energiereserven des elektrischen Energiespeichers geschont. Des Weiteren können Einbußen bei der Reichweite des Kraftfahrzeugs oder dem Verbrauch des Kraftfahrzeugs besonders weitgehend, insbesondere vollständig, vermieden werden, welche ohne das elektrische Beheizen der wenigstens einen Komponente im Fahrbetrieb alleine aufgrund von Verlustleistungen für das Aufheizen der wenigstens einen Komponente des Antriebsstrangs sorgen.

Die Verringerung des Fahrwiderstands des Kraftfahrzeugs bereits vor Fahrtantritt ermöglicht dementsprechend eine Reduzierung des Verbrauchs des Kraftfahrzeugs und eine Vergrößerung oder Erweiterung der Reichweite des Kraftfahrzeugs.

Das thermische Vorkonditionieren beziehungsweise Erwärmen der wenigstens einen Komponente des Antriebsstrangs kann bei einem batteriebetriebenen oder batterieelektrischen Fahrzeug (BEV, Battery Electric Vehicle) zum Einsatz kommen, bei welchem lediglich ein elektrisches Antriebsaggregat für das Fortbewegen des Kraftfahrzeugs sorgt. In analoger Weise kann die thermische Vorkonditionierung der wenigstens einen Komponente des Antriebsstrangs bei einem Plug-in-Hybridfahrzeug zum Einsatz kommen. Bei einem Plug-in-Hybridfahrzeug (PHEV, Plug-in Hybrid Electric Vehicle) ist nämlich üblicherweise eine Mehrzahl von Drehmomentwandlern, Übersetzungen und dergleichen vorgesehen, wie sie auch bei einem verbrennungsmotorisch angetriebenen Kraftfahrzeug zum Einsatz kommen. Hier ist also das Beaufschlagen der wenigstens einen Komponente des Antriebsstrangs mit Wärme zum Verringern des Fahrwiderstands besonders vorteilhaft.

Zusätzlich zu der wenigstens einen Komponente, welche bei angetriebenen Rädern zwischen dem Antriebsaggregat und den angetriebenen Rädern angeordnet ist, kann auch das elektrische und/oder verbrennungsmotorische Antriebsaggregat des Kraftfahrzeugs selber mittels der wenigstens einen elektrischen Heizeinrichtung mit Wärme beaufschlagt werden.

Vorzugsweise wird jedoch insbesondere als die wenigstens eine Komponente ein Getriebe des Kraftfahrzeugs mit der Wärme beaufschlagt. Ein solches Getriebe kann als mehrstufiges Getriebe ausgebildet sein, welches unterschiedliche Übersetzungen aufweist. Insbesondere kann das Getriebe jedoch als Getriebe mit einer festen, einstufigen Übersetzung ausgebildet sein, wie sie beispielsweise in batterieelektrischen Kraftfahrzeugen zum Erreichen einer maximalen Fahrgeschwindigkeit zur Anwendung kommen. Bei derartigen Getrieben ist nämlich aufgrund des Eingriffs mechanischer Komponenten wie etwa Zahnrädern ineinander das Zuführen der Wärme mittels der wenigstens einen elektrischen Heizeinrichtung besonders vorteilhaft, um den Wirkungsgrad zu erhöhen und die Verlustleistung zu verringern.

Zusätzlich oder alternativ kann als die wenigstens eine Komponente ein Lager einer Antriebswelle des Kraftfahrzeugs mit der Wärme beaufschlagt werden. Auch hier erhöht nämlich das Zuführen der Wärme die Leichtgängigkeit und verringert somit die Verluste beim Übertragen von Antriebsenergie mittels der Antriebswelle auf das wenigstens eine angetriebene Rad des Kraftfahrzeugs.

Als weiter vorteilhaft hat es sich gezeigt, wenn als die wenigstens eine Komponente ein Differentialgetriebe des Kraftfahrzeugs mit der Wärme beaufschlagt wird. Auch ein Differentialgetriebe ist nämlich im Hinblick auf das Übertragen von Antriebsleistung mit größeren Verlusten behaftet, solange das Differentialgetriebe noch nicht seine Betriebstemperatur erreicht hat.

Das Differentialgetriebe kann insbesondere als Längsdifferential ausgebildet sein, mittels welchem sich die Antriebsleistung auf eine Vorderachse und eine Hinterachse verteilen lässt. Des Weiteren kann das Differentialgetriebe als Achsdifferential ausgebildet sein, welches für den Ausgleich der Drehzahlen zwischen den beiden an einer Achse des Kraftfahrzeugs angeordneten Rädern sorgt.

Von Vorteil ist es weiterhin, wenn als die wenigstens eine Komponente ein Radlager des wenigstens einen Rads mit der Wärme beaufschlagt wird. Auch im Bereich der Radlager sorgt nämlich das Zuführen von Wärme vorteilhaft für ein Verringern des Fahrwiderstands des Kraftfahrzeugs.

Die wenigstens eine elektrische Heizeinrichtung kann mit einem Schmiermittel in Kontakt sein, welches wenigstens ein, insbesondere bewegbares, Bauteil der Komponente schmiert. Hierbei wird das Schmiermittel mit der Wärme beaufschlagt. Auf diese Weise kann die Wärme besonders effizient an die Stelle beziehungsweise an die Stellen der Komponente gebracht werden, an welchen Bauteile der Komponente ineinandergreifen und das Schmiermittel für ein Schmieren dieser Bauteile sorgt.

Beispielsweise kann die wenigstens eine elektrische Heizeinrichtung in einem Gehäuse der Komponente angeordnet sein, in welchem sich das Schmiermittel für die Bauteile der Komponente befindet.

Zusätzlich oder alternativ kann die wenigstens eine elektrische Heizeinrichtung mit einem Gehäuse der Komponente in Kontakt sein. Hierbei wird das Gehäuse mit der Wärme beaufschlagt. Eine derartige Anordnung, insbesondere an einer Außenseite des Gehäuses, ist insbesondere im Hinblick auf den in dem Gehäuse vorhandenen Bauraum vorteilhaft. Denn es braucht dann kein Bauraum innerhalb des Gehäuses von der elektrischen Heizeinrichtung beansprucht zu werden. Zudem lässt sich so die Versorgung der elektrischen Heizeinrichtung mit von der Ladestation zur Verfügung gestellter elektrischer Energie besonders einfach realisieren.

Die elektrische Heizeinrichtung kann jedoch auch sowohl mit der Außenseite des Gehäuses der Komponente in Kontakt sein als auch ein Stück weit in das Gehäuse hineinragen und hierbei für ein Erwärmen von in dem Gehäuse angeordnetem Schmiermittel und/oder von in dem Gehäuse angeordneten Bauteilen der Komponente sorgen.

Die wenigstens eine elektrische Heizeinrichtung kann während des Ladens des elektrischen Energiespeichers von der Ladestation mit der elektrischen Energie versorgt werden. So kann die für das Laden ohnehin vorzusehende Zeit zusätzlich zum Erwärmen der wenigstens einen Komponente des Antriebsstrangs genutzt werden.

Das erfindungsgemäße Kraftfahrzeug umfasst einen elektrischen Energiespeicher, welcher zum Speichern von elektrischer Energie für ein Antriebsaggregat des Kraftfahrzeugs ausgebildet ist. Das Kraftfahrzeug weist einen Ladeanschluss auf, über welchen eine elektrische Verbindung zwischen dem elektrischen Energiespeicher und einer Ladestation hergestellt werden kann, welche zum Laden des elektrischen Energiespeichers ausgebildet ist. Das Kraftfahrzeug weist wenigstens eine elektrische Heizeinrichtung auf, welche von der Ladestation mit elektrischer Energie versorgt werden kann. Die wenigstens eine elektrische Heizeinrichtung ist an wenigstens einer Komponente eines Antriebsstrangs des Kraftfahrzeugs angeordnet, welche beim Antreiben wenigstens eines Rads des Kraftfahrzeugs im Kraftfluss zwischen dem Antriebsaggregat und dem wenigstens einen antreibbaren beziehungsweise angetriebenen Rad angeordnet ist. Die wenigstens eine elektrische Heizeinrichtung ist mit wenigstens einem in einem Gehäuse der Komponente angeordneten Bauteil der Komponente in Kontakt ist, wobei das wenigstens eine Bauteil mit Wärme beaufschlagbar ist. Mittels des Kraftfahrzeugs ist bewirkbar, dass die wenigstens eine elektrische Heizeinrichtung nicht über den gesamten zum Laden des elektrischen Energiespeichers vorgesehenen Zeitraum hinweg, sondern lediglich während eines Teils des Zeitraums, welcher insgesamt für das Laden des elektrischen Energiespeichers genutzt wird, von der Ladestation mit der elektrischen Energie versorgt wird, wobei gegen Ende des Zeitraums für das Laden des elektrischen Energiespeichers die wenigstens eine Komponente des Antriebsstrangs mit der Wärme beaufschlagt wird. Des Weiteren ist mittels des Kraftfahrzeugs bewirkbar, dass die wenigstens eine elektrische Heizeinrichtung hierbei auch im Anschluss an das Laden des elektrischen Energiespeichers von der Ladestation mit der elektrischen Energie versorgt wird.

Durch das Vorsehen der wenigstens einen elektrischen Heizeinrichtung, welche von der Ladestation mit elektrischer Energie versorgbar ist, kann die wenigstens eine Komponente des Antriebsstrangs des Kraftfahrzeugs thermisch vorkonditioniert beziehungsweise erwärmt werden. Dadurch werden die Fahrwiderstände des Kraftfahrzeugs im Fahrbetrieb reduziert. Dementsprechend lässt sich die Reichweite des Kraftfahrzeugs vergrößern, also die Fahrstrecke welche durch Versorgen des elektrischen Antriebsaggregats des Kraftfahrzeugs mit elektrischer Energie aus dem elektrischen Energiespeicher des Kraftfahrzeugs zurückgelegt werden kann.

Die für das erfindungsgemäße Verfahren beschriebenen Vorteile und bevorzugten Ausführungsformen gelten auch für das erfindungsgemäße Kraftfahrzeug und umgekehrt.

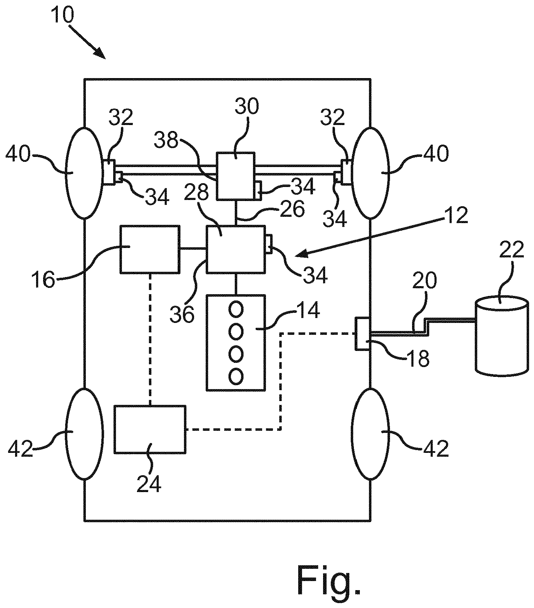

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt stark schematisiert ein Kraftfahrzeug während des Ladens eines elektrischen Energiespeichers desselben, wobei zugleich Komponenten des Antriebsstrangs des Kraftfahrzeugs mittels elektrischer Heizeinrichtungen thermisch vorkonditioniert werden.

Ein in der Figur schematisch gezeigtes Kraftfahrzeug 10 kann als Elektrofahrzeug beziehungsweise batterieelektrisches Fahrzeug oder als Hybridfahrzeug ausgebildet sein. Entsprechend kann ein Antriebsstrang 12 des Kraftfahrzeugs 10 als Antriebsaggregate einen Verbrennungsmotor 14 und einen Elektromotor 16 umfassen. Das Kraftfahrzeug 10 weist einen Ladeanschluss 18 auf, in welchen vorliegend ein Ladekabel 20 eingesteckt ist. Das Ladekabel 20 gehört zu einer Ladestation 22 oder Ladesäule.

Entsprechend ist in der Figur eine Situation gezeigt, in welcher ein elektrischer Energiespeicher 24 des Kraftfahrzeugs 10 geladen wird. Der elektrische Energiespeicher 24, welcher vorliegend als Traktionsbatterie beziehungsweise Hochvoltbatterie ausgebildet ist, liefert elektrische Energie für den Elektromotor 16 des Kraftfahrzeugs 10, wenn das Kraftfahrzeug 10 mittels des Elektromotors 16 alleine oder unterstützt durch den Elektromotor 16 angetrieben wird. Eine zum Antriebsstrang 12 gehörende Antriebswelle 26 des Kraftfahrzeugs 10 ist vorliegend lediglich schematisch gezeigt. Des Weiteren sind in der Figur ein Getriebe 28, ein Achsdifferential 30 sowie Radlager 32 des Kraftfahrzeugs 10 stark schematisiert dargestellt.

Vorliegend wird während des Ladevorgangs die elektrische Energie der Ladestation 22 beziehungsweise Ladesäule nicht nur zum Laden des elektrischen Energiespeichers 24 verwendet. Vielmehr werden auch Komponenten des Antriebsstrangs 12 thermisch vorkonditioniert beziehungsweise erwärmt. Dies geschieht mithilfe von elektrischen Heizeinrichtungen 34, welche in der Figur schematisch gezeigt sind. Auf eine Darstellung elektrischer Verbindungsleitungen von dem Ladeanschluss 18 zu den elektrischen Heizeinrichtungen 34 beziehungsweise Heizelementen ist vorliegend jedoch zum Zwecke der besseren Übersichtlichkeit verzichtet.

Vorliegend ist beispielsweise eine der elektrischen Heizeinrichtungen 34 am Getriebe 28 angeordnet. Mittels dieser Heizeinrichtung 34 kann beispielsweise sich in dem Getriebe 28 befindendes Getriebeöl oder ein derartiges Schmiermittel erwärmt werden. Hierfür kann die Heizeinrichtung 34 an einer Außenseite eines Gehäuses 36 des Getriebes 28 angeordnet sein. Die Heizeinrichtung 34 kann jedoch auch innerhalb des Gehäuses 36 angeordnet und somit direkt mit dem Getriebeöl in Kontakt sein. Des Weiteren können in vorliegend nicht näher gezeigter Art und Weise die Heizeinrichtungen 34 Lager der Antriebswelle 26 mit Wärme beaufschlagen.

Ähnlich wie das Getriebe 28 kann auch das Achsdifferential 30 mittels einer der Heizeinrichtungen 34 vorgewärmt werden, während der elektrische Energiespeicher 24 des Kraftfahrzeugs 10 geladen wird. Auch hier kann die Heizeinrichtung 34 ein Gehäuse 38 des Achsdifferentials 30 mit der Wärme beaufschlagen und somit ein Bauteil, in welchem ein Schmiermittel aufgenommen ist. Die Heizeinrichtung 34 kann jedoch auch hier innerhalb des Gehäuses 38 angeordnet sein, beispielsweise an einem Bauteil innerhalb des Achsdifferentials 30.

Des Weiteren können an den Radlagern 32 angeordnete Heizeinrichtungen 34 für ein Aufwärmen der Radlager 32 sorgen, an welchen mittels des Antriebsstrangs 12 antreibbare Räder 40 des Kraftfahrzeugs 10 gelagert sind. In vorliegend nicht näher gezeigter Art und Weise können auch die Radlager von Rädern 42 an einer vorliegend nicht angetriebenen (und auch nicht dargestellten) Achse des Kraftfahrzeugs 10 mit der von der Ladestation 22 zur Verfügung gestellten elektrischen Energie über entsprechende Heizeinrichtungen vorgewärmt werden, während der elektrische Energiespeicher 24 des Kraftfahrzeugs 10 geladen wird.

Um die Fahrwiderstände des Kraftfahrzeugs 10 im Fahrbetrieb zu reduzieren, wird also vorliegend insbesondere während des Ladevorgangs an der Ladestation 22 beziehungsweise Ladesäule die elektrische Energie verwendet, um Bestandteile beziehungsweise Komponenten des Antriebsstrangs 12, insbesondere das Getriebe 28, die Radlager 32, das Achsdifferential 30, Wellenlager und dergleichen aufzuwärmen. Diese Aufwärmung wird beispielsweise über die elektrischen Heizelemente oder Heizeinrichtungen 34 an den jeweiligen Komponenten durchgeführt. Die Energie zum Versorgen der elektrischen Heizelemente oder Heizeinrichtungen 34 wird jedoch direkt aus der Ladesäule beziehungsweise Ladestation 22 entnommen. Es bestehen somit keine Einbußen im Hinblick auf die Reichweite oder den Verbrauch des Kraftfahrzeugs, welche andernfalls aufgrund von Verlustleistungen im Fahrbetrieb des Kraftfahrzeugs 10 auftreten und dadurch zu einem Aufheizen dieser Komponenten des Antriebsstrangs 12 führen würden.

Die Verringerung des Fahrwiderstands vor Fahrtantritt ermöglicht eine Reduzierung des Verbrauchs des Kraftfahrzeugs 10 und eine Erweiterung der Reichweite desselben. Die hierfür erforderliche Energie wird jedoch direkt der Ladeinfrastruktur entnommen und muss daher nicht dem Energiespeicher 24 des Kraftfahrzeugs 10 entnommen werden.

Bevorzugt sind also die Antriebsstrangkomponenten wie etwa die Radlager 32, das Getriebe 28, Differentialgetriebe wie das Achsdifferential 30, Wellenlager und dergleichen mit elektrischen Heizelementen beziehungsweise den elektrischen Heizeinrichtungen 34 versehen. Diese elektrischen Heizeinrichtungen 34 erwärmen die Komponenten beziehungsweise Bauteile in der Aufladephase und reduzieren damit die Fahrwiderstände im Fahrbetrieb des Kraftfahrzeugs 10.

## Patentansprüche

1. Verfahren zum Betreiben eines Kraftfahrzeugs (10), bei welchem ein elektrischer Energiespeicher (24) des Kraftfahrzeugs (10), welcher zum Speichern von elektrischer Energie für ein Antriebsaggregat (16) des Kraftfahrzeugs (10) ausgebildet ist, geladen wird, wobei wenigstens eine elektrische Heizeinrichtung (34) des Kraftfahrzeugs (10) von einer zum Laden des elektrischen Energiespeichers (24) ausgebildeten Ladestation (22) mit elektrischer Energie versorgt wird,
wobei mittels der wenigstens einen elektrischen Heizeinrichtung (34) wenigstens eine Komponente (26, 28, 30, 32) eines Antriebsstrangs (12) des Kraftfahrzeugs (10) mit Wärme beaufschlagt wird, welche beim Antreiben wenigstens eines antreibbaren Rads (40) des Kraftfahrzeugs (10) im Kraftfluss zwischen dem Antriebsaggregat (16) und dem wenigstens einen Rad (40) angeordnet ist,
**dadurch gekennzeichnet, dass**
die wenigstens eine elektrische Heizeinrichtung (34) mit wenigstens einem in einem Gehäuse (36, 38) der Komponente (26, 28, 30, 32) angeordneten Bauteil der Komponente (26, 28, 30, 32) in Kontakt ist, wobei das wenigstens eine Bauteil mit der Wärme beaufschlagt wird, und wobei die wenigstens eine elektrische Heizeinrichtung (34) nicht über den gesamten zum Laden des elektrischen Energiespeichers (24) vorgesehenen Zeitraum hinweg, sondern lediglich während eines Teils des Zeitraums, welcher insgesamt für das Laden des elektrischen Energiespeichers (24) genutzt wird, von der Ladestation (22) mit der elektrischen Energie versorgt wird, wobei gegen Ende des Zeitraums für das Laden des elektrischen Energiespeichers (24) die wenigstens eine Komponente (26, 28, 30, 32) des Antriebsstrangs mit der Wärme beaufschlagt wird, und wobei die wenigstens eine elektrische Heizeinrichtung (34) im Anschluss an das Laden des elektrischen Energiespeichers (24) von der Ladestation (22) mit der elektrischen Energie versorgt wird.

2. Verfahren nach Anspruch 1,
**dadurch gekennzeichnet, dass**
als die wenigstens eine Komponente ein Getriebe (28) des Kraftfahrzeugs (10) mit der Wärme beaufschlagt wird.

3. Verfahren nach Anspruch 1 oder 2,
**dadurch gekennzeichnet, dass**
als die wenigstens eine Komponente ein Lager einer Antriebswelle (26) des Kraftfahrzeugs (10) mit der Wärme beaufschlagt wird.

4. Verfahren nach einem der Ansprüche 1 bis 3,
**dadurch gekennzeichnet, dass**
als die wenigstens eine Komponente ein Differentialgetriebe, insbesondere ein Achsdifferential (30), des Kraftfahrzeugs (10) mit der Wärme beaufschlagt wird.

5. Verfahren nach einem der Ansprüche 1 bis 4,
**dadurch gekennzeichnet, dass**
als die wenigstens eine Komponente ein Radlager (32) des wenigstens eines Rads (40) mit der Wärme beaufschlagt wird.

6. Verfahren nach einem der Ansprüche 1 bis 5,
**dadurch gekennzeichnet, dass**
die wenigstens eine elektrische Heizeinrichtung (34) mit einem Schmiermittel in Kontakt ist, welches wenigstens ein bewegbares Bauteil der Komponente (26, 28, 30, 32) schmiert, wobei das Schmiermittel mit der Wärme beaufschlagt wird.

7. Verfahren nach einem der Ansprüche 1 bis 6,
**dadurch gekennzeichnet, dass**
die wenigstens eine elektrische Heizeinrichtung (34) mit einem Gehäuse (36, 38) der Komponente (26, 28, 30, 32) in Kontakt ist, wobei das Gehäuse (36, 38) mit der Wärme beaufschlagt wird.

8. Kraftfahrzeug, mit einem elektrischen Energiespeicher (24), welcher zum Speichern von elektrischer Energie für ein Antriebsaggregat (16) des Kraftfahrzeugs (10) ausgebildet ist, mit einem Ladeanschluss (18), über welchen eine elektrische Verbindung zwischen dem elektrischen Energiespeicher (24) und einer Ladestation (22) herstellbar ist, welche zum Laden des elektrischen Energiespeichers (24) ausgebildet ist, und mit wenigstens einer elektrischen Heizeinrichtung (34), welche von der Ladestation (22) mit elektrischer Energie versorgbar ist,
wobei die wenigstens eine elektrische Heizeinrichtung (34) an wenigstens einer Komponente (26, 28, 30, 32) eines Antriebsstrangs (12) des Kraftfahrzeugs (10) angeordnet ist, welche beim Antreiben wenigstens eines antreibbaren Rads (40) des Kraftfahrzeugs (10) im Kraftfluss zwischen dem Antriebsaggregat (16) und dem wenigstens einen Rad (40) angeordnet ist,
**dadurch gekennzeichnet, dass**
die wenigstens eine elektrische Heizeinrichtung (34) mit wenigstens einem in einem Gehäuse (36, 38) der Komponente (26, 28, 30, 32) angeordneten Bauteil der Komponente (26, 28, 30, 32) in Kontakt ist, wobei das wenigstens eine Bauteil mit Wärme beaufschlagbar ist, wobei mittels des Kraftfahrzeugs (10) bewirkbar ist, dass die wenigstens eine elektrische Heizeinrichtung (34) nicht über den gesamten zum Laden des elektrischen Energiespeichers (24) vorgesehenen Zeitraum hinweg, sondern lediglich während eines Teils des Zeitraums, welcher insgesamt für das Laden des elektrischen Energiespeichers (24) genutzt wird, von der Ladestation (22) mit der elektrischen Energie versorgt wird, wobei gegen Ende des Zeitraums für das Laden des elektrischen Energiespeichers (24) die wenigstens eine Komponente (26, 28, 30, 32) des Antriebsstrangs mit der Wärme beaufschlagt wird, und wobei mittels des Kraftfahrzeugs (10) bewirkbar ist, dass die wenigstens eine elektrische Heizeinrichtung (34) hierbei auch im Anschluss an das Laden des elektrischen Energiespeichers (24) von der Ladestation (22) mit der elektrischen Energie versorgt wird.

## Claims

1. Method for operating a motor vehicle (10), in which an electrical energy store (24) of the motor vehicle (10) is charged, which is designed to store electrical energy for a drive unit (16) of the motor vehicle (10), wherein at least one electrical heating device (34) of the motor vehicle (10) is supplied with electrical energy by a charging station (22) designed to charge the electrical energy store (24),
wherein heat is applied, by means of the at least one component (26, 28, 30, 32) of a drive train (12) of the motor vehicle (10), to the at least one electrical heating device (34), which component is arranged in the power flow between the drive unit (16) and the at least one wheel (40) when at least one drivable wheel (40) of the motor vehicle (10) is driven,
**characterised in that**
the at least one electrical heating device (34) is in contact with at least one part of the component (26, 28, 30, 32) arranged in a housing (36, 38) of the component (26, 28, 30, 32), wherein the heat is applied to the at least one part and wherein the at least one electrical heating device (34) is supplied with the electrical energy by the charging station (22) not over the entire period provided for charging the electrical energy store (24), but only during a part of the period that is used overall for charging the electrical energy store (24), wherein the heat is applied to the at least one component (26, 28, 30, 32) of the drive train towards the end of the period for charging the electrical energy store (24), and wherein the at least one electrical heating device (34) is supplied with the electrical energy by the charging station (22) following the charging of the electrical energy store (24).

2. Method as claimed in claim 1,
**characterised in that**
the heat is applied to a transmission (28) of the motor vehicle (10) as the at least one component.

3. Method as claimed in claim 1 or 2,
**characterised in that**
the heat is applied to a bearing of a drive shaft (26) of the motor vehicle (10) as the at least one component.

4. Method as claimed in any one of claims 1 to 3,
**characterised in that**
the heat is applied to a differential, in particular an axle differential (30), of the motor vehicle (10) as the at least one component.

5. Method as claimed in any one of claims 1 to 4,
**characterised in that**
the heat is applied to a wheel bearing (32) of the at least one wheel (40) as the at least one component.

6. Method as claimed in any one of claims 1 to 5,
**characterised in that**
the at least one electrical heating device (34) is in contact with a lubricant that lubricates at least one movable part of the component (26, 28, 30, 32), wherein the heat is applied to the lubricant.

7. Method as claimed in any one of claims 1 to 6,
**characterised in that**
the at least one electrical heating device (34) is in contact with a housing (36, 38) of the component (26, 28, 30, 32), wherein the heat is applied to the housing (36, 38).

8. Motor vehicle, having an electrical energy store (24) that is designed to store electrical energy for a drive unit (16) of the motor vehicle (10), having a charging connection (18) via which an electrical connection can be established between the electrical energy store (24) and a charging station (22) that is designed to charge the electrical energy store (24), and having at least one electrical heating device (34) that can be supplied with electrical energy by the charging station (22),
wherein the at least one electrical heating device (34) is arranged on at least one component (26, 28, 30, 32) of a drive train (12) of the motor vehicle (10), which is arranged in the power flow between the drive unit (16) and the at least one wheel (40) when driving at least one drivable wheel (40) of the motor vehicle (10),
**characterised in that**
the at least one electrical heating device (34) is in contact with at least one part of the component (26, 28, 30, 32) arranged in a housing (36, 38) of the component (26, 28, 30, 32), wherein heat can be applied to the at least one part, wherein it can be effected by means of the motor vehicle (10) that the at least one electrical heating device (34) is supplied with the electrical energy by the charging station (22) not over the entire period of time provided for charging the electrical energy store (24), but only during a part of the time period that is used in total for charging the electrical energy store (24), wherein the heat is applied to the at least one component (26, 28, 30, 32) of the drive train towards the end of the period of time for charging the electric energy store (24), and wherein it can be effected by means of the motor vehicle (10) that the at least one electrical heating device (34) is supplied with the electrical energy by the charging station (22) herein also following the charging of the electrical energy store (24).

## Revendications

1. Procédé de fonctionnement d'un véhicule automobile (10), pour lequel un accumulateur d'énergie électrique (24) du véhicule automobile (10), lequel est réalisé pour accumuler de l'énergie électrique pour un groupe d'entraînement (16) du véhicule automobile (10), est chargé, dans lequel au moins un dispositif de chauffage électrique (34) du véhicule automobile (10) est alimenté avec de l'énergie électrique par un poste de chargement (22) réalisé pour charger l'accumulateur d'énergie électrique (24),
dans lequel au moyen de l'au moins un dispositif de chauffage électrique (34) au moins un composant (26, 28, 30, 32) d'une chaîne cinématique (12) du véhicule automobile (10) est soumis à de la chaleur, lequel lors de l'entraînement au moins une roue (40) pouvant être entraînée du véhicule automobile (10) est disposée dans le flux de force entre le groupe d'entraînement (16) et l'au moins une roue (40),
**caractérisé en ce que**
l'au moins un dispositif de chauffage électrique (34) est en contact avec au moins un élément disposé dans un boîtier (36, 38) du composant (26, 28, 30, 32), dans lequel l'au moins un élément est soumis à de la chaleur, et dans lequel l'au moins un dispositif de chauffage électrique (34) n'est pas alimenté avec l'énergie électrique par le poste de chargement (22) pendant toute la période prévue pour charger l'accumulateur d'énergie électrique (24), mais uniquement pendant une partie de la période, laquelle est utilisée entièrement pour le chargement de l'accumulateur d'énergie électrique (24), dans lequel à la fin de la période de chargement de l'accumulateur d'énergie électrique (24) l'au moins un composant (26, 28, 30, 32) de la chaîne cinématique est soumis à de la chaleur, et dans lequel l'au moins un dispositif de chauffage électrique (34) à la suite du chargement de l'accumulateur d'énergie électrique (24) est alimenté avec l'énergie électrique par le poste de chargement (22).

2. Procédé selon la revendication 1,
**caractérisé en ce que**
comme l'au moins un composant, un entraînement (28) du véhicule automobile (10) est soumis à de la chaleur.

3. Procédé selon la revendication 1 ou 2,
**caractérisé en ce que**
comme l'au moins un composant, un support d'un arbre d'entraînement (26) du véhicule automobile (10) est soumis à de la chaleur.

4. Procédé selon l'une quelconque des revendications 1 à 3,
**caractérisé en ce que**
comme l'au moins un composant, un engrenage différentiel, en particulier un différentiel d'essieu (30), du véhicule automobile (10) est soumis à de la chaleur.

5. Procédé selon l'une quelconque des revendications 1 à 4,
**caractérisé en ce que**
comme l'au moins un composant, un palier de roue (32) de l'au moins une roue (40) est soumis à de la chaleur.

6. Procédé selon l'une quelconque des revendications 1 à 5,
**caractérisé en ce que**
l'au moins un dispositif de chauffage électrique (34) est en contact avec un lubrifiant, lequel lubrifie au moins un élément mobile du composant (26, 28, 30, 32), dans lequel le lubrifiant est soumis à de la chaleur.

7. Procédé selon l'une quelconque des revendications 1 à 6,
**caractérisé en ce que**
l'au moins un dispositif de chauffage électrique (34) est en contact avec un boîtier (36, 38) du composant (26, 28, 30, 32), dans lequel le boîtier (36, 38) est soumis à de la chaleur.

8. Véhicule automobile, équipé d'un accumulateur d'énergie électrique (24), lequel est réalisé pour accumuler de l'énergie électrique pour un groupe d'entraînement (16) du véhicule automobile (10), équipé d'une borne de recharge (18), via laquelle un raccordement électrique peut être obtenu entre l'accumulateur d'énergie électrique (24) et un poste de chargement (22), lequel est réalisé pour charger l'accumulateur d'énergie électrique (24), et avec au moins un dispositif de chauffage électrique (34), lequel peut être alimenté avec de l'énergie électrique par le poste de chargement (22),
dans lequel l'au moins un dispositif de chauffage électrique (34) est disposé au niveau d'au moins un composant (26, 28, 30, 32) d'une chaîne cinématique (12) du véhicule automobile (10), lequel est disposé lors de l'entraînement d'au moins une roue (40) pouvant être entraînée du véhicule automobile (10) dans le flux de force entre le groupe d'entraînement (16) et l'au moins une roue (40),
**caractérisé en ce que**
l'au moins un dispositif de chauffage électrique (34) est en contact avec au moins un élément du composant (26, 28, 30, 32) disposé dans le boîtier (36, 38) du composant (26, 28, 30, 32), dans lequel l'au moins un élément est soumis à de la chaleur, dans lequel, au moyen du véhicule automobile (10), il peut être commandé que l'au moins un dispositif de chauffage électrique (34) ne soit pas alimenté avec l'énergie électrique par le poste de chargement (22) pendant toute la période prévue pour charger l'accumulateur d'énergie électrique (24), mais uniquement pendant une partie de la période, laquelle est utilisée entièrement pour le chargement de l'accumulateur d'énergie électrique (24), dans lequel à la fin de la période de chargement de l'accumulateur d'énergie électrique (24) l'au moins un composant (26, 28, 30, 32) de la chaîne cinématique est soumis à de la chaleur, et dans lequel au moyen du véhicule automobile (10) il peut être commandé que l'au moins un dispositif de chauffage électrique (34) soit également alimenté ici avec l'énergie électrique à la suite du chargement de l'accumulateur d'énergie électrique (24) par le poste de chargement (22).
